# EUROPÄISCHE PATENTSCHRIFT

(11) **EP 3 168 374 B1**
(45) Veröffentlichungstag und Bekanntmachung des Hinweises auf die Patenterteilung: **10.06.2020**
(21) Anmeldenummer: 16002185.3
(22) Anmeldetag: 11.10.2016
(51) Int. Cl.: E03B 3/03, B65D 88/76, B65D 90/02

(54) **KUNSTSTOFFBEHÄLTER**
PLASTIC CONTAINER
RÉCIPIENT EN MATIÈRE PLASTIQUE

(30) Priorität: 12.11.2015 DE 102015014594
(43) Veröffentlichungstag der Anmeldung: 17.05.2017
(73) Patentinhaber: Boller, Reinhard, 57234 Wilnsdorf (DE)
(72) Erfinder: Boller, Reinhard, 57234 Wilnsdorf (DE)
(74) Vertreter: Haverkamp, Jens

(56) Entgegenhaltungen:
- DE-A1- 19 733 589
- DE-U1-202011 000 683
- US-A- 2 341 547
- US-A- 5 806 702

## Beschreibung

Die Erfindung betrifft einen Kunststoffbehälter zum Einbau in das Erdreich zur Speicherung, Lagerung oder Behandlung von Flüssigkeiten mit an seinen Außenseiten angeordneten, in vertikaler Richtung verlaufenden Verstärkungsrippen. Ferner betrifft die Erfindung einen solchen Kunststoffbehälter, der in das Erdreich eingebaut ist.

Tanks bzw. Behälter aus Kunststoff, die in das Erdreich eingebaut werden und zur Lagerung, Speicherung (wie zum Beispiel Regenwasser, Abwasser, Silagesickersaft und andere Flüssigkeiten) sowie zur Behandlung von Flüssigkeiten, zum Beispiel zur Abwasserbehandlung, verwendet werden, unterliegen systembedingt entsprechenden Anforderungen an Konstruktion, Form, Aufteilung und Gestaltung.

Beispielsweise sind neben dem Druck bzw. den Kräften, den/die das Erdreich auf den eingebauten Behälter ausübt, die Verkehrslasten sowie der auf den Behälter einwirkende Grundwasserspiegel von erheblicher Bedeutung, da die meist aus einwandigen Kunststoffen hergestellten Behälter in diesem Bereich eine mechanische Anfälligkeit gegen diese auftretenden Kräfte haben. Die Tanks bzw. Behälter aus Kunststoff müssen diese Kräften über einen sehr langen Zeitraum sicher widerstehen oder, sofern dies nicht gegeben ist, können diese Tanks nur eingeschränkt oder gar nicht für diesen Verwendungszweck eingesetzt werden.

Darüber hinaus liegen weiterhin im langjährigen Betrieb eines solchen Tanks bzw. Behälter aus Kunststoff die Risiken hinsichtlich der Entwicklung des langfristigen und kurzfristigen Grundwasserspiegels bzw. sich hier verändernder Ereignisse. Dies können zum Beispiel Hochwasserereignisse sein oder die Änderung des Grundwasserspiegels zum Beispiel in Tagebaubereichen.

Weiterhin müssen die Kunststoffbehälter auch eine Form haben, die Vorteile für die betreffende Anwendung bietet. So haben sich am Beispiel von Behältern im Zusammenhang mit einer Abwasserreinigung Behälter, die als runde oder rechteckig stehende Behälter beschrieben werden können, als sehr vorteilhaft erwiesen. Zudem nutzen stehende Behälter den Raum der Baugrube hinsichtlich des nutzbaren Volumens sehr gut aus.

Bekannt sind Kunststoffbehälter für diesen Einsatz, die sich grob in zwei Behälterformen aufteilen lassen.

Zum einen sind es Kunststoffbehälter, die als runde oder rechteckige stehende Zylinder beschrieben werden können. Einen rechteckig stehenden Behälter stellt zum Beispiel die Firma RIKUTEC Richter Kunststofftechnik GmbH & Co.KG, Graf-Zeppelin-Straße 1-5, 57610 Altenkirchen her (ein solcher Behälter kann im Internet unter folgender Internetadresse eingesehen werden: http://www.rikutec-environment.de/index.php?id=10). Diese Behälter bieten zwar sehr gute Voraussetzungen für den Einsatz der biologischen Abwasserreinigung. Gleichzeitig sind Behälter mit dieser Grundform sehr anfällig gegen die nach dem Einbau auftretenden seitlichen Kräfte, da die Seitenwände aufgrund ihrer vertikal verlaufenden Rippen keine hohen Kräfte aufnehmen können. Solche Behälter sind zur konstruktiven Verstärkung mit entsprechenden horizontal und/oder vertikal verlaufenden Rippenstrukturen ausgestattet. Dabei zeigen die Rippen in der Regel einen recht gleichmäßigen Verlauf.

Zum anderen sind es Kunststoffbehälter, die als überwiegend liegende Röhren beschrieben werden können. Ein solcher Kunststoffbehälter wird beispielsweise von der Firma Otto GRAF GmbH Kunststofferzeugnisse, Carl-Zeiss-Str. 2-6, 79331 Teningen hergestellt (Behälter auf folgender Internetseite dargestellt http://www.graf-online.de/abwasser/klaerbehaelter/klaerbehaelter-carat-ohne trennwand/klaerbehaelter-carat-ohne-trennwand-begehbar.html). Solche Behälter sind ebenfalls zur konstruktiven Verstärkung mit entsprechenden horizontal und/oder vertikal verlaufenden Rippenstrukturen ausgestattet. Dabei zeigen die Rippen in der Regel einen recht gleichmäßigen Verlauf.

Diese Kunststoffbehälter haben zwar durch ihre Form und die umlaufenden Rippen eine höhere Widerstandskraft gegen die von der Seite auftretenden Kräfte. Für die Abwasserreinigung sind diese Behälter aber durch ihre Nachteile nicht geeignet. Denn im unteren und im oberen Bereich steht jeweils nur eine geringe Fläche zur Verfügung, sodass zum Beispiel bei SBR Anlagen eine wesentlich größere Pufferhöhe im oberen Bereich ausgebildet werden muss, da bei fast vollgefülltem Behälter nur noch eine geringe Oberfläche aufgrund des nach oben beengten Behälters zur Verfügung steht.

DE 20 2011 000 683 offenbart einen Lagertank aus Kunststoff zur Aufnahme von Flüssigkeiten. Der Lagertank ist als liegender Tank mit einer im Wesentlichen quaderförmigen Ausgestaltung ausgebildet. Ausdrücklich wird in diesem Stand der Technik der Einsatz stehender Lagertranks als nachteilig angesehen. Zur Stabilisierung des liegenden Lagertanks bezüglich der darauf einwirkenden vertikalen Kräfte bei einem Einbau desselben ins Erdreich, sind ringförmige, jedoch zumindest teilringförmige Verstärkungsrippen vorgesehen, die einstückig mit der Wand des Grundkörpers ausgebildet sind. Diese sind in die Geometrie der Mantelfläche des quaderförmigen Grundkörpers eingearbeitet. Lediglich in den mittleren Bereichen der Seitenflächen stehen die Verstärkungsrippen gegenüber diesem hervor. In den Übergangsbereichen sind die Verstärkungsrippen nach innen gerichtet ausgeprägt und reduzieren dadurch das Füllvolumen des Grundkörpers.

US 5,806,702 A offenbart einen stehenden gerippten Lagertank aus Polyethylen. Die Verstärkungsrippen sind in einer horizontalen Ebene befindlich umlaufend ausgeführt.

DE 197 22 589 A1 offenbart einen Erdtank in liegender Bauweise. Dieser vorbekannte Erdtank ist ebenfalls durch umlaufende Verstärkungsrippen versteift. Die Längsachse der voneinander beabstandeten Verstärkungsrippen ist gegenüber der Längsachse des Behälters versetzt, so dass sich der Behälter selbst exzentrisch bezüglich der Längsachse der Verstärkungsrippen befindet. Der Versatz erfolgt in vertikaler Richtung, und zwar dergestalt, dass die Verstärkungsrippen ihre größte Ausprägung an der Oberseite des Behälters haben. Diese nehmen somit in vertikaler Richtung hinsichtlich ihrer Ausprägung von oben ab.

Die vorstehend beschriebenen einzelnen Lösungsansätze bieten jedoch bisher keinen umfassenden Lösungsansatz in Form eines Kunststoffbehälters, der sowohl der jeweiligen Einzelanforderung als auch der Summe der bestehenden Anforderungen in ausreichendem Maße gerecht wird.

Dieser Erfindung liegt die Aufgabe zugrunde, einen Kunststoffbehälter vorzuschlagen, der die Anforderung an einen Tank bzw. Behälter aus Kunststoff hinsichtlich der Anforderungen an einen sicheren Einbau in das Erdreich, der erforderlichen konstruktiven Ausgestaltung, dem Standhalten der auf den Behälter einwirkenden Kräfte wie beispielsweise verschiedene Bodenklassen und Bodenbeschaffenheit, einwirkende Erdlast, einwirkende Belastungen durch Personen oder Fahrzeuge auf dem Behälter (Verkehrslasten), berechenbare und unberechenbare Grundwasserspiegel bzw. Einfluss von Schichtenwasser gerecht wird. Gleichzeitig soll der Behälter für die Nutzung zum Beispiel als Abwasserbehandlungsanlage möglichst ideal gestaltet sein. In einer bevorzugten Ausführung soll der Behälter im Inneren der Form eines stehenden Zylinders (rund, rechteckig oder vieleckig) nahe kommen.

Gelöst wird diese Aufgabe erfindungsgemäß durch einen eingangs genannten, gattungsgemäßen Kunststoffbehälter, bei dem die Verstärkungsrippen an den Außenseiten des Kunststoffbehälters von oben nach unten verlaufend nicht gleichmäßig gestaltet sind, sondern hinsichtlich ihrer Ausprägung und damit hinsichtlich des Abstandes zwischen Behälterinnenwand und Außenkante der Verstärkungsrippen so gestaltet sind, dass deren Ausprägung im oberen Bereich des Behälters nur einen geringen Abstand von diesem und im unteren Bereich des Behälters einen wesentlich größeren Abstand von diesem aufweist, da die Ausprägung der Verstärkungsrippen im eingebauten Zustand des Kunststoffbehälters von oben nach unten zunimmt.

Dieser Kunststoffbehälter ist durch eine intelligente Rippengestaltung durch eine intelligente Konstruktion so gestaltet sein, dass der zur Herstellung des Behälters notwendige Kunststoff genau dort eingesetzt wird, wo er konstruktiv auch benötigt wird. Vereinfacht ausgedrückt: wo die auf den Behälter wirkende Last groß ist, wird mehr Kunststoff eingesetzt und wo die auf den Behälter einwirkende Last geringer ist, wird weniger Kunststoff eingesetzt.

Nachfolgend wird die Erfindung anhand verschiedener Figuren beschrieben.

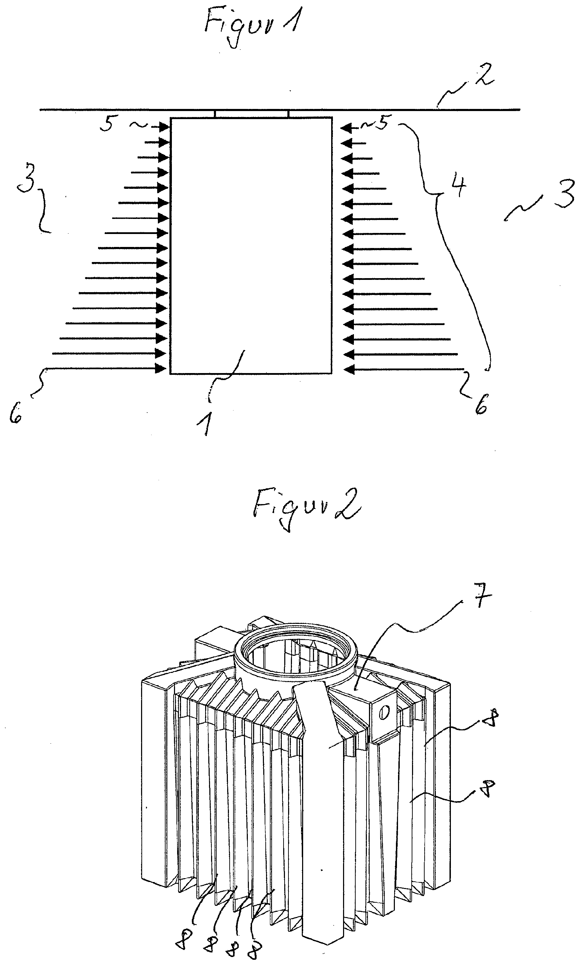

Figur 1 zeigt in beispielhafter Ausführung einen Tank bzw. Behälter aus Kunststoff 1, nachfolgend Kunststoffbehälter 1 genannt. Es handelt sich um einen Kunststoffbehälter aus einem Kunststoffmaterial oder einer Materialzusammensetzung, in der Kunststoff in wesentlicher Menge enthalten ist, vorzugsweise einem thermoplastischen Kunststoff, der durch Wärmeeinwirkung entsprechend geformt bzw. verformt werden kann. Insbesondere sollen hiermit auch Kunststoffbehälter umfasst sein, die durch thermisch basierte Herstellungsverfahren, wie das bekannte Blasformverfahren, (beispielsweise Extrusionsblasformen, Hohlkörperblasen) oder Rotationsverfahren hergestellt werden. Der Kunststoffbehälter 1 ist in Figur 1 in der Erde unter der Geländeoberkante 2 eingebaut und von Erdreich 3 umgeben. Die auf den Kunststoffbehälter einwirkenden Kräfte sind mit Pfeilen 4 dargestellt. Je größer die auf den Kunststoffbehälter einwirkende Kraft durch das umgebende Erdreich ist, desto länger ist der Pfeil gezeichnet. Dies bedeutet, dass zum Beispiel im Bereich von Pfeil 5 die auf den Kunststoffbehälter wirkende Kraft gering ist, während die im Bereich von Pfeil 6 die auf den Kunststoffbehälter wirkende Kraft groß ist. Es ist erkennbar, dass zwischen Pfeil 5 und Pfeil 6 die auf den Behälter wirkende Kraft stets größer wird.
In Figur 2 ist ein Kunststoffbehälter 7 abgebildet, wie er typischerweise als stehender Behälter hergestellt wird. Die an dem Behälter in vertikaler Richtung verlaufenden Rippen 8 zur Verstärkung des Kunststoffbehälters verlaufen nahezu gleichmäßig am Behälter entlang. Das bedeutet, dass sowohl im oberen Bereich des Behälters als auch in der Mitte und im unteren Bereich des Behälters die Rippen konstruktiv den gleichen Aufbau haben. Dies wiederum widerspricht aber der in Figur 1 dargestellten tatsächlichen Belastung im eingebauten Zustand.

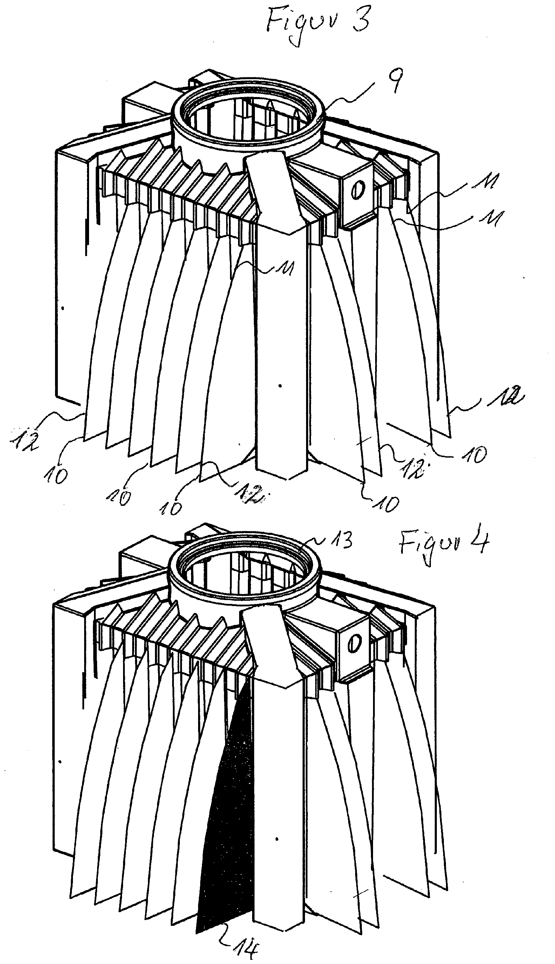

Der erfindungsgemäße Kunststoffbehälter ist in Figur 3 beispielhaft dargestellt. In Figur 3 ist ein Kunststoffbehälter 9 dargestellt. An dessen Außenseite befinden sich Rippen 10. Diese Rippen sind dadurch gekennzeichnet, dass ihre Ausprägung im oberen Bereich 11 nur einen geringen Abstand vom Kunststoffbehälter 9 aufweist, während ihre Ausprägung im unteren Bereich 12 einen wesentlich größeren Abstand vom Kunststoffbehälter 9 aufweist. Der Verlauf der Rippen von 11 oben nach unten 12 entspricht somit in etwa dem Verlauf der in Figur 1 mit Pfeilen 4 dargestellten auf den Behälter einwirkenden Kräfte. Je größer die Kraft, desto stärker die Ausprägung der Rippen.

Der erfindungsgemäße Kunststoffbehälter ist nochmals in Figur 4 beispielhaft dargestellt. In Figur 4 ist ein Kunststoffbehälter 13 dargestellt, wobei hier die Rippen analog der Figur 3 dargestellt sind. Zur Verdeutlichung der erfindungsgemäßen Rippenstruktur ist eine solche Rippe dunkel eingefärbt 14. Damit soll die von oben nach unten zunehmende Ausprägung der Rippe verdeutlicht werden.

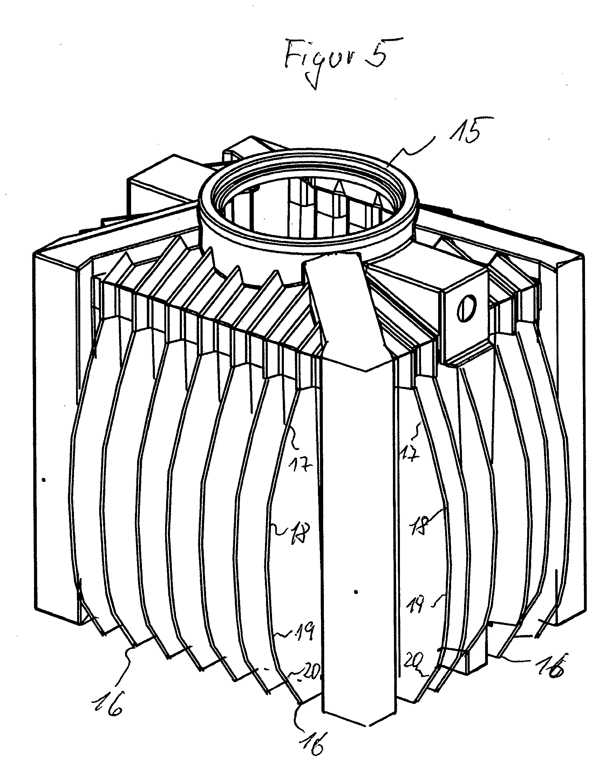

In Figur 5 ist eine Ausgestaltung dargestellt, die nicht der Erfindung entspricht. In Figur 5 ist ein Kunststoffbehälter 15 dargestellt. In dieser Figur ist erkennbar, dass die Rippen 16 einen anderen Verlauf als in Figur 3 und Figur 4 nehmen. Auch in Figur 5 steigt die Ausprägung der Rippe 16 im Bereich 17 nach unten langsam an und setzt sich bis zum Bereich 18 steigend fort. Es ist aber erkennbar, dass im Bereich 19 die Rippenausprägung nicht weiter angestiegen ist, sondern sich im Gegenteil zum Bereich 20 in der Ausprägung wieder reduziert. Auch wenn die Kräfte, die auf den Kunststoffbehälter wirken, von oben nach unten tatsächlich zunehmen, wirkt in dieser beispielhaften Ausgestaltung der Boden des Kunststoffbehälters diesen Kräften entgegen, da er die seitlichen Behälterwände gegen einander abstützt. Insofern kann in dieser beispielhaften Ausgestaltung die Ausprägung der Rippen im unteren Bereich reduziert werden.

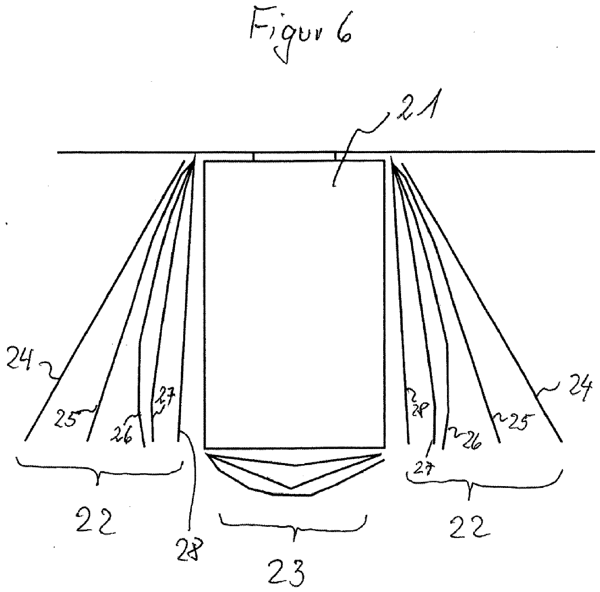

In Figur 6 sind beispielhafte weitere Ausgestaltungen der Rippenstrukturen der Erfindung dargestellt. Der Kunststoffbehälter 21 kann mit verschiedenen, beispielhaft dargestellten Rippenstrukturen 22 und 23 ausgestattet sein. Die verschiedenen seitlichen Rippenstrukturen 22 umfassen beispielsweise Rippenstrukturen, die im Verlauf von oben nach unten linear zu nehmen 24 und 25 sowie 28, wobei sich die Zunahme der Rippenstrukturen nicht hinsichtlich der gleichmäßigen Zunahme, sondern hinsichtlich der Steigerung der Zunahme unterscheiden. So nimmt die Rippenstruktur 28 hinsichtlich der Zunahme von oben nach unten wesentlich geringer ausgeprägt zu als die Zunahme der Rippenstruktur 24. Die Zunahme der Rippen von oben kann direkt proportional zu den seitlich auftretenden Kräften sein.

Die dargestellten Rippenstrukturen 26 und 27 sind im oberen Bereich durch eine Zunahme der Rippenstärke gekennzeichnet, die aber im unteren Bereich stagniert bzw. wieder abnimmt. Diese Rippenstrukturen 26 und 27 sind nicht Teil der Erfindung.

Da auch auf den Boden des Kunststoffbehälter 21 als Fläche entsprechende Kräfte einwirken, kann auch hier eine entsprechend den auftretenden Kräften eine Verstärkung der Rippen vorgesehen werden.

Da in der Mitte des Behälterbodens der Behälter die schwächste Stelle hat, ist hier die Rippenstruktur besonders stark ausgebildet. Die verschiedenen Rippenstrukturen 23 im Bodenbereich zeigen die vielfältigen Möglichkeiten der Ausprägung der Rippenstrukturen im Bereich des Bodens des Kunststoffbehälters.

Die Wandstärke der Rippen liegt zwischen 1 mm und 30 mm, vorzugsweise zwischen 3 und 15 mm. In besonders wirtschaftlicher Konstruktion liegt die Wandstärke zwischen 5 und 12 mm.

Weiterhin kann der Kunststoffbehälter durch einen oder mehrere zusätzliche Rahmen, die in den Kunststoffbehälter eingelegt werden, vorzugsweise in dem Bereich zwischen dem oberen Drittel und dem unteren Drittel der Höhe des Behälters, versteift bzw. konstruktiv gegen die seitlich wirkenden Kräfte aus dem den Behälter umgebenden Boden (Erdreich bzw. Material zur Verfüllung der Baugrube) und Grundwasser verstärkt werden. Der zusätzliche Rahmen bzw. die zusätzlichen Rahmen können dabei aus Kunststoff oder Edelstahl oder einem sonstigen Metall oder Werkstoff (zum Beispiel GfK) gefertigt sein und beispielsweise als Flachstab, Winkel, Rohr oder Röhren ausgebildet sein oder den Querschnitt einer sonstigen geometrischen Form einnehmen. Der Rahmen kann durch Biegung, Schweißung, Verschraubung, Verklebung, Kombinationen dieser Verbindungstechniken oder durch einfaches Ineinanderstecken hergestellt werden. Dabei kann der Rahmen entweder als fertiger Rahmen in den Behälter eingeführt werden oder im Behälter montiert und dann an den Innenwänden des Behälters fixiert werden. Es können an der Behälterinnenwand entsprechende Vorrichtungen zur Aufnahme/Fixierung des Rahmens angebracht werden. Durch solche Rahmen können die Rippenstrukturen in der Ausprägung und damit die Materialeinsatz reduziert werden.

Die vorstehende Erfindung kann in einer vorzugsweise Ausgestaltung auch mit der unter dem Aktenzeichen DE 10 2015 011 481 A1 zum Patent angemeldeten Erfindung genutzt werden, wobei hierbei die Vorteile beider Erfindungen miteinander kombiniert werden können.

## Patentansprüche

1. Kunststoffbehälter zum Einbau in das Erdreich zur Speicherung, Lagerung oder Behandlung von Flüssigkeiten mit an seinen Außenseiten angeordneten, in vertikaler Richtung verlaufenden Verstärkungsrippen (10, 22), **dadurch gekennzeichnet, dass** die Verstärkungsrippen (10, 22) an den Außenseiten des Kunststoffbehälters (9, 13, 21) von oben nach unten verlaufend nicht gleichmäßig gestaltet sind, sondern hinsichtlich ihrer Ausprägung und damit hinsichtlich des Abstandes zwischen Behälterinnenwand und Außenkante der Verstärkungsrippen (10, 22) so gestaltet sind, dass deren Ausprägung im oberen Bereich des Behälters (9, 13, 21) nur einen geringen Abstand von diesem und im unteren Bereich des Behälters (9, 13, 21) einen wesentlich größeren Abstand von diesem aufweist, da die Ausprägung der Verstärkungsrippen (10, 22) im eingebauten Zustand des Kunststoffbehälters (9, 13, 21) von oben nach unten zunimmt.

2. Kunststoffbehälter (9, 13, 21) nach Anspruch 1, **dadurch gekennzeichnet, dass** der Rippenverlauf in Bezug auf seine Ausprägung proportional zu den nach Einbau des Kunststoffbehälters in das Erdreich auftretenden Seitenkräften gestaltet ist.

3. Kunststoffbehälter (9, 13, 21) nach einem oder mehreren der vorangehenden Ansprüche, **dadurch gekennzeichnet, dass** die Verstärkungsrippen (10, 22) rund oder eckig sein können oder eine sonstige geometrische Form einnehmen können.

4. Kunststoffbehälter (9, 13, 21) nach einem der Ansprüche 1 bis 3, **dadurch gekennzeichnet, dass** die Wandstärke der Rippen zwischen 5 und 12 mm liegt.

5. Kunststoffbehälter (9, 13, 21) nach einem oder mehreren der vorangehenden Ansprüche, **dadurch gekennzeichnet, dass** der Kunststoffbehälter (9, 13, 21) mit einem Verstärkungsrahmen im Inneren verstärkt ist und dadurch die Anzahl und/oder Größe der Verstärkungsrippen (10, 22) reduziert ist.

6. Kunststoffbehälter (9, 13, 21) nach einem oder mehreren der vorangehenden Ansprüche, **dadurch gekennzeichnet, dass** der Kunststoffbehälter aus einem thermoplastischen Material besteht und der Kunststoffbehälter durch ein Rotationsverfahren oder ein Blasformverfahren hergestellt ist.

7. Im Erdreich eingebauter Kunststoffbehälter (9, 13, 21) zur Speicherung, Lagerung oder Behandlung von Flüssigkeiten mit an seinen Außenseiten angeordneten, in vertikaler Richtung verlaufenden Verstärkungsrippen (10, 22), **dadurch gekennzeichnet, dass** der Kunststoffbehälter die Merkmale eines oder mehrerer der Ansprüche 1 bis 6 aufweist.

## Claims

1. Plastic container for installing in the earth for the holding, storage, or treatment of fluids, comprising reinforcement ribs (10, 22) arranged on its outside and running in a vertical direction, **characterised in that** the reinforcement ribs (10, 22) on the outer sides of the plastic container (9, 13, 21), running from top to bottom, are not arranged uniformly, but are arranged in respect of their embossing, and therefore in respect of the distance interval between the inner wall of the container and the outer edge of the reinforcement ribs (10, 22), in such a way that their embossing in the upper region of the container (9, 13, 21) exhibits only a small distance interval from the container, and in the lower region of the container (9, 13, 21) exhibits a substantially greater distance interval from the container, since the embossing of the reinforcement ribs (10, 22) in the installed state of the plastic container (9, 13, 21) increases from the top to the bottom.

2. Plastic container (9, 13, 21) according to claim 1, **characterised in that** the course of the ribs in relation to their embossing is proportional to the lateral forces incurred after the installation of the plastic container in the earth.

3. Plastic container (9, 13, 21) according to any one of the preceding claims, **characterised in that** the reinforcement ribs (10, 22) can be circular or angular, or can assume any other geometric shape.

4. Plastic container (9, 13, 21) according to any one of claims 1 to 3, **characterised in that** the wall thickness of the ribs lies between 5 and 12 mm.

5. Plastic container (9, 13, 21) according to any one of the preceding claims, **characterised in that** the plastic container (9, 13, 21) is reinforced with a reinforcement frame in the interior, and, as a result, the number and/or size of the reinforcement ribs (10, 22) is reduced.

6. Plastic container (9, 13, 21) according to any one of the preceding claims, **characterised in that** the plastic container consists of a thermoplastic material, and the plastic container is manufactured by a rotation process or a blow-moulding process.

7. Plastic container (9, 13, 21) for installing in the earth for the holding, storage, or treatment of fluids, with reinforcement ribs (10, 22) arranged on its outside and running in a vertical direction, **characterised in that** the plastic container exhibits the features of one or more of claims 1 to 6.

## Revendications

1. Cuve en matière plastique à enterrer, afin de stocker, d'entreposer ou de traiter des liquides, comportant des ailettes de renfort (10, 22) s'étendant dans le sens vertical, disposées sur ses côtés extérieurs, **caractérisée en ce que** les ailettes de renfort (10, 22), sur le côté extérieur de la cuve en matière plastique (9, 13, 21) s'étendant du haut vers le bas ne sont pas conformées régulièrement, mais qu'elles sont conformées en ce qui concerne leur aspect et par conséquent en ce qui concerne l'écart entre la paroi interne de la cuve et l'arête extérieure des ailettes de renfort (10, 22), de telle manière que leur forme, dans la zone supérieure de la cuve (9, 13, 21) présente une faible distance par rapport à celle-ci et, dans la zone inférieure de la cuve (9, 13, 21), présente une distance sensiblement plus élevée par rapport à celle-ci, puisque la forme des ailettes de renfort (10, 22) s'accroît du haut vers le bas lorsque la cuve en matière plastique (9, 13, 21) est enterrée.

2. Cuve en matière plastique (9, 13, 21) selon la revendication 1, **caractérisée en ce que** le tracé des ailettes est conformé par rapport à leur forme proportionnellement aux forces latérales s'exerçant après la mise en terre de la cuve.

3. Cuve en matière plastique (9, 13, 21) selon l'une ou plusieurs des revendications précédentes, **caractérisée en ce que** les ailettes de renfort (10, 22) peuvent être rondes ou angulaires ou adopter une forme géométrique quelconque.

4. Cuve en matière plastique (9, 13, 21) selon l'une des revendications 1 à 3, **caractérisée en ce que** l'épaisseur des ailettes se situe entre 5 et 12 mm.

5. Cuve en matière plastique (9, 13, 21) selon l'une ou plusieurs des revendications précédentes, **caractérisée en ce que** la cuve en matière plastique (9, 13, 21) est renforcée de l'intérieur par un cadre de renfort et que la quantité et/ou la dimension des ailettes de renfort (10, 22) sont de ce fait réduites.

6. Cuve en matière plastique (9, 13, 21) selon l'une ou plusieurs des revendications précédentes, **caractérisée en ce que** la cuve en matière plastique est constituée d'un matériau thermoplastique et que la cuve en matière plastique est fabriquée au cours d'un procédé de rotomoulage ou d'un procédé de moulage par soufflage.

7. Cuve en matière plastique (9, 13, 21) enterrée afin de stocker, d'entreposer ou de traiter des liquides, comportant des ailettes de renfort (10, 22) s'étendant dans le sens vertical, disposées sur ses côtés extérieurs, **caractérisée en ce que** la cuve en matière plastique présente les caractéristiques d'une ou de plusieurs revendications 1 à 6.
